# EUROPEAN PATENT APPLICATION

(11) **EP 4 293 134 A1**
(43) Date of publication of application: **20.12.2023**
(21) Application number: 22214218.4
(22) Date of filing: 16.12.2022
(51) Int. Cl.: C23C 4/10, C23C 4/129, C23C 30/00

(54) **IMPROVED WEAR RESISTANT COATINGS**

(30) Priority: 17.06.2022 US 202263353217 P; 14.12.2022 US 202218066064
(71) Applicant: Praxair S.T. Technology, Inc., North Haven, CT 06473 (US)
(72) Inventor: Smith, Adam J., Brownsburg, 46112 (US); Wang, Daming, Carmel, 46033 (US); Brennan, Michael S., Carmel, 46032 (US); Kleyman, Ardy S., Carmel, 46032 (US)
(74) Representative: Schwan Schorer & Partner mbB

(57) **Abstract**

Improved wear resistant coatings are provided based upon a novel abrasion resistance factor (R) for a given average size of abrasive fine particles. The improved wear resistant coatings exhibit minimal oxide content and minimal porosity, while exhibiting improved wear resistance and hardness. The improved wear resistant coatings are made from a composite material consisting of a hard phase and a metallic binder derived from powder particle sizes ranging from about 0.5 µm - 30 µm as part of a modified thermal spray process.

## Description

### Cross Reference to Related Applications

This application claims the benefit of priority to U.S. Provisional Application Serial No. 63/353,217 filed June 17, 2022, the disclosure of which is incorporated by reference herein in its entirety.

### Field of the Invention

The present invention generally relates to improved wear resistant thermal spray coatings. In particular, the resultant coating structure has a substantial absence of oxide content and porosity in combination with a reduced mean free path of a metallic binder such that a substantial portion of fine abrasive particles are unable to erode away the binder.

### Background of the Invention

Tungsten Carbide (WC) based thermal spray coatings are known to exhibit suitable abrasion wear resistance. Such coatings have been widely used for industrial applications such as aviation as well as oil and gas where abrasion conditions are problematic. However, new applications are emerging that are presenting even more harsh fine abrasion conditions, whereby conventional WC based thermal spray coatings may not offer satisfactory performance against the finer abrasive particles.

In view of the inadequacy of conventional WC based thermal spray coatings for emerging applications with harsh fine abrasion conditions, there is an unmet need for improved wear resistant coatings.

### Summary of the Invention

The invention may include any of the following aspects in various combinations and may also include any other aspect of the present invention described below in the written description.

Other aspects, features and embodiments of the disclosure will be more fully apparent from the ensuing description and appended claims.

In a first aspect, an improved coated article for use in producing a battery electrode material containing fine abrasive particles, comprising: an article, said article adapted to come into contact with the fine abrasive particles; a wear resistant coating on a surface of said article, wherein said wear resistant coating comprises one or more hard phases of carbide based materials at a fraction of 83-94 wt.% based on a total weight of the coating, with the balance being a metallic binder; wherein the wear resistant coating has an abrasion resistance factor designated as (R) to ensure a majority of the fine abrasive particles that are adapted to come into contact with the improved coated article are situated atop the hard phases thereby reducing or minimizing contact of the fine abrasive particles with the metallic binder, said abrasion resistance factor (R) defined as a ratio of an average size of the fine abrasive particles to a mean free path of the metallic binder.

In a second aspect, an enhanced wear resistant coating having a porosity of less than about 1 vol% and oxide content of less than about 2.5 vol%, said coating thermally sprayed by a modified, high-velocity thermal spray process using a mixture of fuel and oxygen with one or more inert gases using fine powder particles ranging from about 0.5 to about 30 microns, and further wherein said coating comprises hard phases and a metallic binder, whereby said coating has an abrasion resistance factor designated as (R), said abrasion resistance factor (R) defined as a ratio of an average size of fine abrasive particles to a mean free path of the metallic binder, said abrasion resistance factor (R) having a value ranging from about 1 to about 65 for corresponding average sizes of the fine abrasive particles ranging from about 0.5 to 15 microns.

In a third aspect, an enhanced wear resistant coating suitable for protection against fine abrasive particles, said wear resistant coating having a porosity of less than about 1 vol% and an oxide content of less than about 2.5 vol%, said wear resistant coating comprising hard phases and a metallic binder, said coating configured to substantially reduce abrasion loss of the metallic binder with an abrasion resistance factor designated as (R) defined as a ratio of an average size of the abrasive fine particles to a mean free path of the metallic binder, said abrasion resistance factor having a value ranging from about 1 to about 65; with the proviso that when an average size of the abrasive fine particles is about 0.5, the abrasion resistance factor (R) ranges from about 1 to about 3; with the proviso that when an average size of the abrasive fine particles is about 0.75, the abrasion resistance factor (R) ranges from about 2 to about 4; with the proviso that when an average size of the abrasive fine particles is about 1 micron, the abrasion resistance factor (R) ranges from about 3 to about 5; with the proviso that when the average size of the abrasive fine particles ranges from about 2 to about 3 microns, the abrasion resistance factor (R) ranges from about 6 to about 14; with the proviso that when the average size of the abrasive fine particles ranges from about 4 to about 7 microns, the abrasion resistance factor (R) ranges from about 13 to about 30; and with the proviso that when the average size of the abrasive fine particles ranges from about 8 to about 15 microns, the abrasion resistance factor (R) ranges from about 25 to about 65.

### Brief Description of the Drawings

The objectives and advantages of the invention will be better understood from the following detailed description of the preferred embodiments thereof in connection with the accompanying figures wherein like numbers denote same features throughout and wherein:
**Figure 1a** shows a graphical illustration of a conventional wear resistant coating undergoing rapid abrasion and erosion;
**Figure 1b** shows a graphical illustration of an improved wear resistant coating in accordance with the principles of the present invention capable of enhanced fine abrasion particle and erosion resistance'
**Figure 2** is an optical micrograph at a magnification of 500X of an improved wear resistant coating in accordance with the principles of the present invention as described in Example 1;
**Figure 3** is an optical micrograph at a magnification of 500X of an improved wear resistant coating in accordance with the principles of the present invention as described in Example 2; and
**Figure 4** is an optical micrograph at a magnification of 500X of a conventional wear resistant coating as described in Comparative Example 1.

### Detailed Description of the Invention

The relationship and functioning of the various elements of the embodiments are better understood by the following detailed description. The detailed description contemplates the features, aspects and embodiments in various permutations and combinations, as being within the scope of the disclosure. The disclosure may therefore be specified as comprising, consisting or consisting essentially of, any of such combinations and permutations of these specific features, aspects and embodiments, or a selected one or ones thereof.

Where a range of values describes a parameter, all sub-ranges, point values and endpoints within that range or defining a range are explicitly disclosed herein. All physical property, dimension, and ratio ranges and sub-ranges (including point values and endpoints) between range end points for those properties, dimensions, and ratios are considered explicitly disclosed herein.

All percentages herein and throughout, unless expressed otherwise, are volume percentages based on a total volume of the coating.

"Battery electrode material" as used herein and throughout means any materials, including precursors and raw materials, that are involved in the processing and manufacture of the final battery electrode material, including, but not limited to, LiCoO₂; Li(NiCoMn)O₂; Li(NiCoAl)O₂; LiMn₂O; and LiFePO₄.

"Metallic binder" as used herein and throughout means a phase in a wear resistant coating that is softer in comparison to hard phases in the same coating.

"Fine abrasive particles" as used herein and throughout is intended to reference the relatively smaller diameter of abrasive particles having a median size range of about 0.5 um to about 15 um as measured by laser diffraction, and which are typically used in applications such as, but not limited to, the preparation and manufacture of battery electrode materials.

"Article" as used herein and throughout includes, but is not limited to, mixing equipment components such as blades and vessels; slot dies; gravure rollers; calender rollers; and any other surface of a part or component requiring a protective coating such as the improved wear resistant coatings of the present invention.

"Average size" as used herein and throughout means particles having a median size as can be measured by a standard technique known as laser diffraction.

"Ra" as used herein and throughout means the arithmetic mean of the absolute values of the roughness profile ordinates.

"Rmax" as used herein and throughout means the largest single roughness depth within the evaluation length.

The drawings are for the purpose of illustrating the invention and are not intended to be drawn to scale. The embodiments are described with reference to the drawings in which similar elements are referred to by like numerals. Certain features may be intentionally omitted in each of the drawings to better illustrate various aspects of the novel wear resistant coatings. The embodiments are described by way of example only, and the invention is not limited to the embodiments illustrated in the drawings.

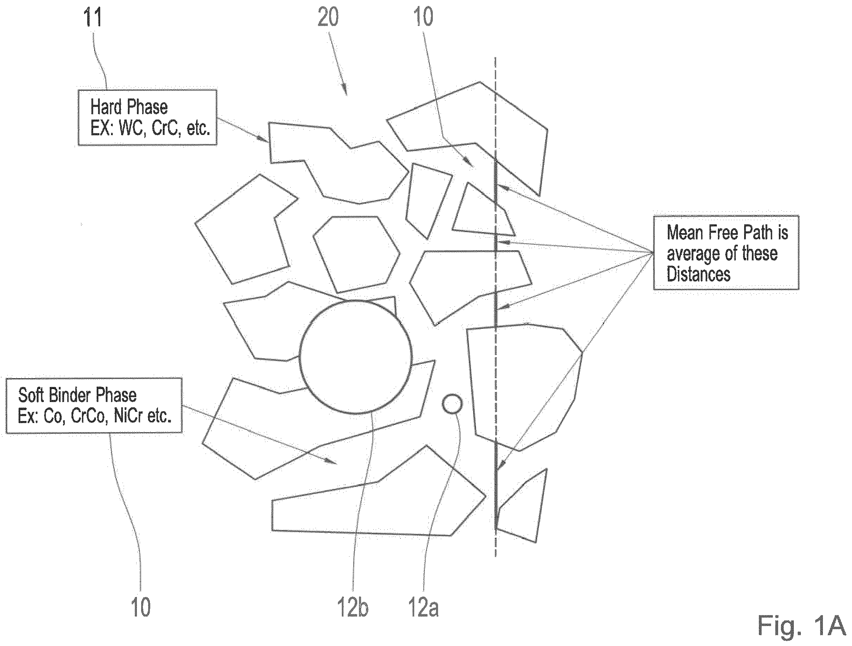

Conventional wear resistant coatings can be used to come into contact with fine abrasive particles in many applications which produce various materials and articles, such as battery electrode materials. However, conventional wear resistant coatings can rapidly wear when in contact with fine abrasive particles. The inventors recognized that the high wear of conventional wear resistant coatings is generally attributed to the preferential wear of the metallic binder within the coating. The metallic binder may be susceptible to abrasion and erosion wear loss as a result of coming into contact with the fine abrasive particles. In particular, the mean free path of the metallic binder is sufficiently large and undesirably leads to a greater amount of fine abrasive particles that are able to come into contact with the metallic binder. To further illustrate this phenomena, Figure 1a shows a graphical representation of a conventional wear resistant carbide coating 20 that includes hard carbide particles 11 dispersed within a metallic binder 10. The hard carbide particles 11 are spaced apart to a sufficient degree to enable a mean free path of the metallic binder 10 that can accommodate a significant portion of the relatively smaller fine abrasive particles 12a. Due to the large fraction of fine abrasive particles 12a that are typically capable of coming in contact with the metallic binder 10 of conventional wear resistant coatings 20, the metallic binder 10 can undergo rapid removal, thereby causing unacceptably high abrasion and erosion material loss of the coating 20.

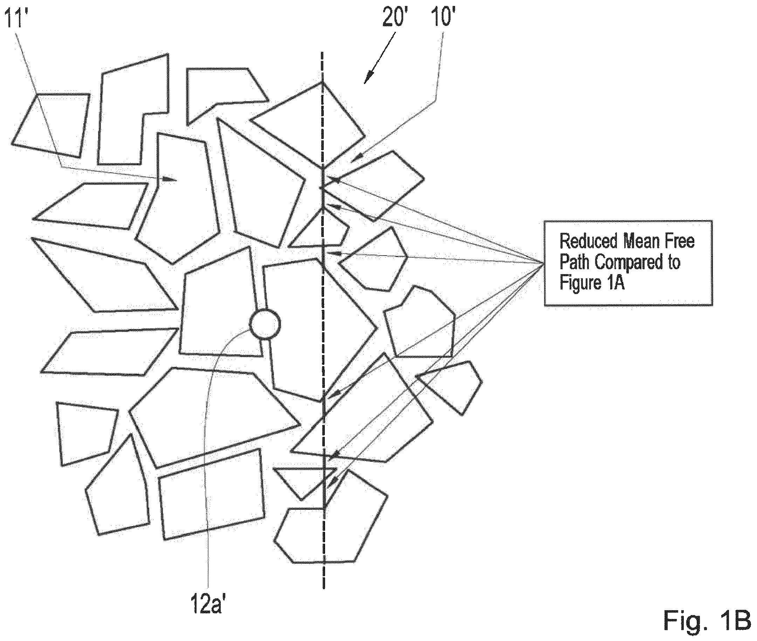

Hence, the inventors recognized a need for improved wear resistant coatings. The present invention has emerged as a result of the failure of conventional wear resistant coatings, such as those graphically illustrated in Figure 1a, to effectively protect against abrasion and erosion wear on various surfaces of articles that come into contact with fine abrasive particles during processing of the fine abrasive particles into various films and materials. The inventors discovered that purposely reducing the distance between the hard phases in a wear resistant coating allows reducing or minimizing contact of the fine abrasive particles with the metallic binder. The result is enhanced abrasion and erosion resistance, as the hard phases do not significantly experience wear from the fine abrasive particles. Figure 1b shows a graphical representation of an improved wear resistant carbide coating 20' suitable for protection against fine abrasive particles. The distance between the hard carbide particles 11' is reduced in comparison to that of Figure 1a to allow a greater proportion of fine abrasive particles 12a' to be situated atop the hard carbide particles 11'. The reduced particle spacing of adjacent or neighboring hard carbide particles 11' creates a smaller mean free path of the metallic binder 10' thereby posing difficulty for the fine abrasive particles 12a' to come in contact with the metallic binder 10' in comparison to the conventional wear resistant coating of Figure 1a. The net effect is a substantial reduction or elimination of fine abrasive particles in the metallic binder 10', which translates into significantly reduced wear of the coating 20' from rapid metallic binder removal. As a result, extended lifetime is achieved of the coated articles that encounter the fine abrasive particles 12a' during various processing steps. The need to re-coat or repair the surfaces of the articles due to rapid wear of the coating 20' is substantially reduced. The reduced spacing between the hard phases can be achieved by loading more hard phases per unit volume into the coating, thereby increasing the total volume fraction of the hard phases. Alternatively, or in addition thereto, the reduced spacing can be achieved by the usage of a smaller particle size of the hard phases.

In accordance with the principles of the present invention, the improved wear resistant coatings of the present invention delivers optimized abrasion and erosion resistance in comparison to conventional wear resistant coatings. The improved wear resistant coatings of the present invention are formulated to exhibit a certain abrasion resistance factor designated as (R), which is defined as a ratio of an average size of the fine abrasive particles (typically, expressed in units of microns, µm) to a mean free path of the metallic binder (typically, expressed in units of microns, µm). The mean free path as shown in the Figures 1a and 1b represents the average of the distances between edges of neighboring hard phase particles (11, 11') embedded in the soft phase binder (10, 10'), as indicated by the various arrows. The mean free path is preferably calculated using Fiji Image software, an open-source image analysis software based on ImageJ, which was originally developed by the National Institute of Health, and which is accessible at https://imagej.net/software/fiji//. The software can be used to measure the linear distance in the x- and y-directions between phases after an image has been converted to a black and white image. The abrasion resistance factor (R) is dimensionless and is a meaningful novel design criterion of the present invention in the formulation of the improved wear resistant coatings. The R value is a reliable measure of expected performance of the coating against abrasion and erosion incurred from the coating coming into contact with specific fine abrasive particles of a given size. A range of R values are provided for a given average size of a fine abrasive particle that is in contact with the coating for specific applications.

In one embodiment of the present invention, an article is coated with the improved wear resistant coating to make a battery electrode material from fine abrasive particles. The wear resistant coating preferably comprises carbide based materials at a fraction of about 83-94 wt.% based on a total weight of the coating, with the balance being a metallic binder. The wear resistant coating includes hard carbide based particles and a metallic binder. The article is preferably a calender roll that comes into contact with the fine abrasive particles to compact the fine abrasive particles into a film to create a battery electrode material of a certain chemical composition. The abrasion resistance factor (R) in such applications has a value ranging from about 1 to about 65 for corresponding average sizes of the fine abrasive particles ranging from about 0.5 to 15 microns. Specifically, the coating is designed or tuned to exhibit a R minimum value and R maximum value for a certain average size of abrasive particle as shown in Table 1, hereinbelow.

**Table 1: Abrasion Resistance Factors (R) of Coated Articles for Making Battery Electrode Materials**

| | | | | | | |
|---|---|---|---|---|---|---|
| Average Abrasive Size (µm) | 0.5 | 0.75 | 1 | 2-3 | 4-7 | 8-15 |
| Minimum R Value | 1 | 2 | 3 | 6 | 12.5 | 25 |
| Maximum R Value | 3 | 4 | 5 | 14 | 30 | 65 |

For fine abrasive particles having a size (i.e., average size) of 0.5 microns, the coating is formulated to have a R value ranging from about 1 to about 3. For fine abrasive particle having a size of about 0.75 microns, the coating is formulated to have a R value ranging from about 2 to about 4. For fine abrasive particles having a size of about 1 microns, the coating is formulated to have a R value ranging from about 3 to about 5. For fine abrasive particles having a size of about 2 to about 3 microns, the coating is formulated to have a R value ranging from about 6 to about 14. For fine abrasive particles having a size of about 4 to about 7 microns, the coating is formulated to have a R value ranging from about 12.5 to about 30. For fine abrasive particles having a size of about 8 to about 15 microns, the coating is formulated to have a R value ranging from about 25 to about 65.

In this manner, the mean free path of the metallic binder is determined based on the average size of the fine abrasive particles that are in contact with the calender roll(s). The prescribed R values as shown in Table 1 enable a majority of the fine abrasive particles that come into contact with the coated article (e.g., coated calender roll) to be situated atop the hard phases of the coating, thereby reducing or minimizing contact of the fine abrasive particles with the metallic binder. As a result, the life of the coated calender roll is extended, thereby resulting in less calender roll changeouts. Other benefits include minimal surface roughness and profile change of the original coated calender roll. As a result, the quality of the battery electrode material is consistent for a longer period of time, thus improving production output and reducing quality nonconformances.

Any suitable type of chemical composition can be used for the fine abrasive particles. In one embodiment, the fine abrasive particles comprises lithium ions to create the battery electrode materials.

It should be understood that Table 1 represents one specific instance of an application for making battery electrode materials, and the principles of the present invention are applicable to formulating coatings for protection against any fine abrasive particle that is utilized for making materials and films in other applications.

The hard phases of the wear resistant coating may comprise any carbide based material, including, but not limited to, WC, CrC, (W,Cr)C, TiC, VC, NbC, B₄C, SiC, Diamond or a combination thereof; and the metallic binder may comprise, any metallic based material, including, but not limited to, Co, CoCr, Ni, NiCr, Mo, Fe, FeCrAl, FeCr, FeB, FeAl, TiAl, Ti or a combination thereof. Any combination of the hard phases and the metallic binder are contemplated. In an alternative embodiment, the hard phase may comprise a non-carbide based material such as various nitrides. The hard phases may be in a fraction of any suitable amount, including 83-94 wt.% based on a total weight of the coating.

In addition to superior abrasion and erosion wear, the coatings of the present invention exhibit minimal porosity and minimal oxide content. In one embodiment, the coating exhibits oxide content of less about 2.5 vol%, more preferably less than about 1 vol% and most preferably less than about 0.5 vol%, based on a total volume of the coating. Porosity is less than about 1 vol%, more preferably less than about 0.5 vol% and most preferably less than about 0.3 vol%, based on a total volume of the coating. The reduction or elimination of oxides and porosity can result in the reduction or elimination of localized defects in the surface finish of the coated article. Additionally, the lack of oxides and porosity also help to improve the hardness and ductility of the coating. Coating hardness is preferably characterized by a Vickers Hardness equal to or greater than about 950 HV_{300g}, more preferably, greater than about 1200 HV_{300g}, and most preferably greater than about 1350 HV_{300g}.

The improved wear resistance of the coatings can be created from a modified high-velocity thermal spray process. The powder feedstock consists of fine particles ranging from about 0.5 to about 30 microns, which is not practical for usage in conventional thermal spray processes. Preferably, the improved wear resistant coatings are formed using a modified high velocity oxygen fuel ("HVOF") process, which uses an inert gas to pre-mix with oxygen, as described in Applicants' U.S. Patent Published Patent App. No. 2020/048753, the details of which are incorporated herein by reference in its entirety for all purposes.

Several experiments were performed to validate the improved wear resistant coatings. In accordance with the principles of the present invention, certain test coatings were prepared with reduced particle spacing to create abrasion resistance factors designated as R, based on the abrasive test media to be used. The inventive coatings were prepared using the modified HVOF process described in Applicants' U.S. Patent Published Patent App. No. 2020/048753.

Binder mean free path for the test coatings were measured using image analysis software Fuji (ImageJ). The software was able to measure the average linear distance of the metallic binder after the image was converted to black and white. Having calculated the mean free path from the average linear distance, the R values were determined based on test usage of a fine abrasive media of alumina angular powder having an average size of 5 microns.

The abrasion wear performance evaluation was conducted by Applicants by utilizing a rotating wet wheel abrasive test, which was primarily based on the ASTM G105 standard subject to the following modifications of (i) usage of a modified rubber wheel that was approximately 216 mm in diameter and 12.7 mm wide; (ii) wheel rotation at 50 RPM for 3000 revolutions; (iii) abrasive media of 5 microns alumina angular powder; (iv) a test slurry prepared by mixing 1200 g alumina powder (+/- 2g) and 700 g deionized water (+/-2g); and (v) coated samples polished to approximately 20 to about 40 µm (Ra) surface finish prior to testing. The test specimens were exposed to the fine abrasive media in the test slurry. The face of the coated sample was pressed against the modified rubber wheel and was abraded by the fine abrasive particles in the test slurry to simulate wear of the coating. The 5 microns alumina angular powder was used to simulate more harsh fine abrasion conditions. The test was carried out for 3000 revolutions using the modified rubber wheel. Samples were weighed before and after testing on a digital scale with a 0.0001 g accuracy level and results were converted to a volume loss through the use of the coating material's specific density.

Starting and final roughness of the samples were measured using a Mahr S2 Perthometer. The roughness profiles were evaluated and characterized by Ra and Rmax values.

### Example 1

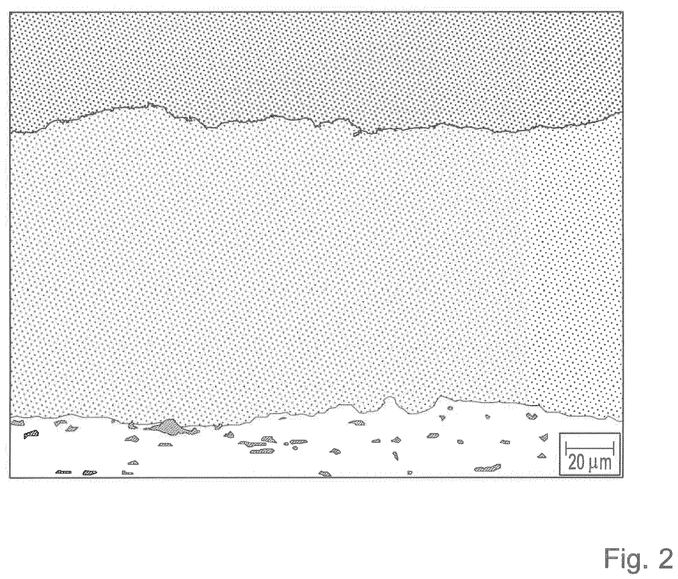

An inventive carbide-based coating having a fraction of 94 wt.% WC and 6 wt.% Co was prepared and tested as described hereinabove. The coating was determined to have a mean free path of 0.30 microns. The coated test specimen prior to the abrasion test was observed to exhibit minimal porosity and minimal oxide content, based on optical microscopy analysis. Figure 2 shows an optical micrograph of the coating at a magnification of 500X. No coating oxides and no coating porosity were observed in Figure 2. The hardness was measured to be 1500 BV_{300g}. The coating of Figure 2 underwent abrasion testing (as described hereinabove), and an abrasion resistance factor (R) for the coating was determined to be 16.7, based on contact of the coating with the fine abrasive media of 5 microns alumina angular powder. The rotating wet wheel abrasive test revealed a wear scar with a volume loss of material of 0.122 mm³ per 1000 revolutions. The test validated that a coating prepared in accordance with the R values as shown in Table 1 exhibited a reduced amount of coating loss in comparison to conventional wear resistant coatings. Surface roughness of the wear scar was measured to increase by only 0.019 µm Ra and only 0.433 µm Rmax after fine abrasion testing.

### Example 2

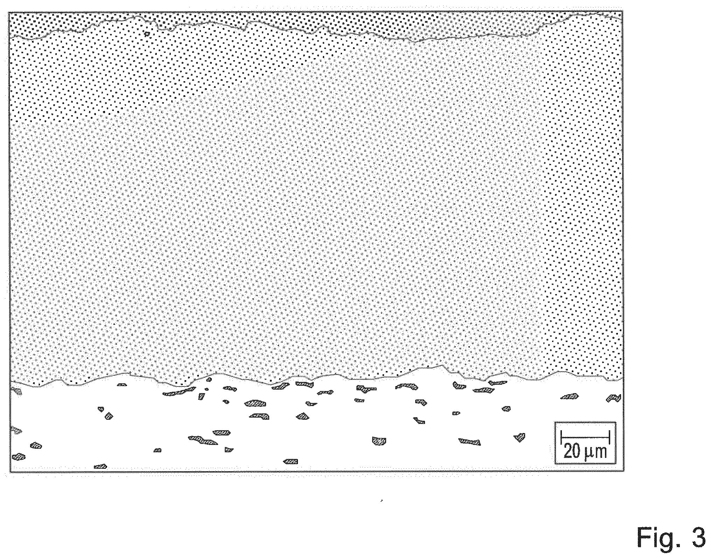

An inventive carbide-based coating having a fraction of 86 wt.% WC, 10 wt.% Co and 4 wt.% Cr was prepared and tested as described hereinabove. The coating was determined to have a mean free path of 0.253 microns. The coated test specimen prior to the abrasion test was observed to exhibit minimal porosity and minimal oxide content, based on optical microscopy analysis. Figure 3 shows an optical micrograph of the coating at a magnification of 500X. No coating oxides and no coating porosity were observed in Figure 3. The hardness was measured to be 1400 HV_{300g}. The coating of Figure 3 underwent abrasion testing (as described hereinabove) and an abrasion resistance factor (R) for the coating was determined to be 19.8, based on contact of the coating with the fine abrasive media of 5 microns alumina angular powder. The rotating wet wheel abrasive test revealed a wear scar with a volume loss of material of 0.134 mm³ per 1000 revolutions. The test validated that a coating prepared in accordance with the R values as shown in Table 1 exhibited a reduced amount of coating loss in comparison to conventional wear resistant coatings. Surface roughness of the wear scar was measured to increase by only 0.023 µm Ra and only 0.403 µm Rmax after fine abrasion testing.

Both Examples 1 and 2 validated that the R value is a reliable measure of expected performance of an enhanced formulated coating against abrasion and erosion incurred from the coating coming into contact with specific fine abrasive particles of a given size, as shown in Table 1.

### Comparative Example 1

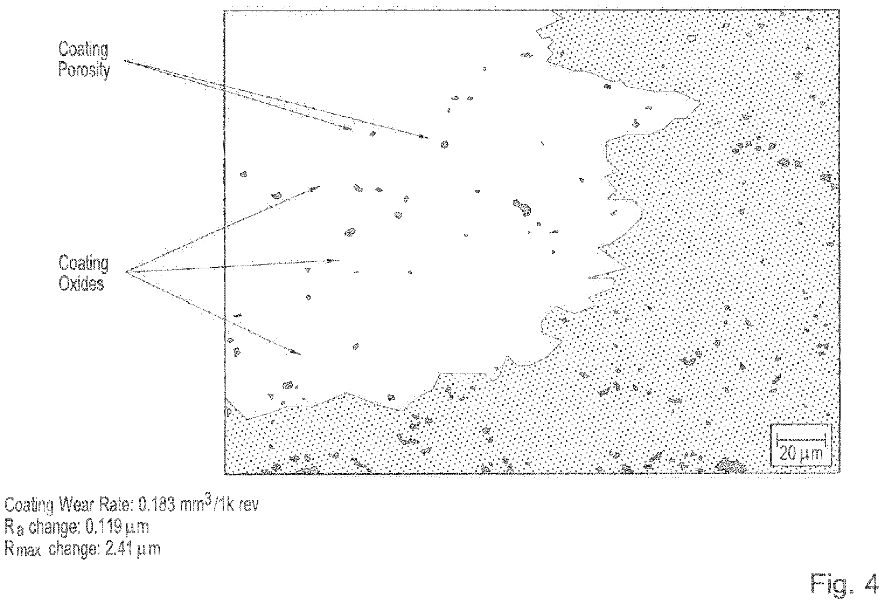

A carbide-based coating having a fraction of 86 wt.% WC, 10 wt.% Co and 4 wt.% Cr was prepared using a traditional HVOF process without premixing and tested as described hereinabove. The coating was determined to have a mean free path of 0.566 microns, which was significantly higher than those measured in Examples 1 and 2. The coated test specimen prior to the abrasion test was observed to exhibit substantial porosity and exhibited substantial oxide content, based on optical microscopy analysis. Figure 4 shows an optical micrograph of the coating at a magnification of 500X. Substantial coating porosity was observed in Figure 4 as shown by the presence of numerous holes. Substantial coating oxides were observed as shown by the presence of numerous "stringers." The hardness was measured to be 1300 HV_{300g}. The coating of Figure 4 underwent fine abrasion testing (as described hereinabove), and an abrasion resistance factor (R) for the coating was determined to be 8.8, based on contact of the coating with the fine abrasive media of 5 microns alumina angular powder. The rotating wet wheel abrasive test revealed a wear scar with a volume loss of material of 0.183 mm³ per 1000 revolutions. The test validated that a coating not prepared in accordance with the range of R values in Table 1 exhibited a significant increase in the amount of coating loss in comparison to the coatings of Examples 1 and 2. Surface roughness of the wear scar was measured to increase by 0.119 µm Ra and 2.41 µm Rmax after fine abrasion testing, which was indicative of significantly higher damage than encountered with the coatings of Examples 1 and 2.

The test data confirmed that producing wear resistant coatings having an abrasion resistance factor (R) at or above the minimum R value of 12.5 while being at or below the maximum R value of 30 in which said coatings came into with contact with an abrasive particle size within 4-7 microns was able to produce improved wear resistant coatings with substantially reduced porosity, substantially reduced oxides and substantially reduced wear loss of material in comparison to a conventional wear resistant coating not having a R value within the requisite ranges.

While it has been shown and described what is considered to be certain embodiments of the invention, it will, of course, be understood that various modifications and changes in form or detail can readily be made without departing from the spirit and scope of the invention. It is, therefore, intended that this invention not be limited to the exact form and detail herein shown and described, nor to anything less than the whole of the invention herein disclosed and hereinafter claimed.

## Claims

1. An improved coated article for use in producing a battery electrode material containing fine abrasive particles, comprising:
an article, said article adapted to come into contact with the fine abrasive particles;
a wear resistant coating on a surface of said article, wherein said wear resistant coating comprises one or more hard phases of carbide based materials at a fraction of 83-94 wt.% based on a total weight of the coating, with the balance being a metallic binder;
wherein the wear resistant coating has an abrasion resistance factor designated as (R) to ensure a majority of the fine abrasive particles that are adapted to come into contact with the improved coated article are situated atop the hard phases thereby reducing or minimizing contact of the fine abrasive particles with the metallic binder, said abrasion resistance factor (R) defined as a ratio of an average size of the fine abrasive particles to a mean free path of the metallic binder.

2. The improved coated article of claim 1, wherein said abrasion resistance factor (R) has a value ranging from about 1 to about 65 for corresponding average sizes of the fine abrasive particles ranging from about 0.5 to 15 microns.

3. The improved coated article of claim 1, wherein said wear resistant coating is derived from a thermally sprayed, high velocity process using a thermal spray powder having a particle size ranging from about 0.5 to about 30 microns.

4. The improved coated article of claim 3, wherein said wear resistant coating is produced by a modified high-velocity thermal spray process using a mixture of fuel with oxygen and an inert gas.

5. The improved coated article of claim 1, further comprising an oxide content of less than about 2.5 vol%.

6. The improved coated article of claim 1, further comprising a porosity of less than about 1 vol%.

7. The improved coated article of claim 1, further comprising a Vickers Hardness equal to or greater than about 950 HV_{300g}.

8. The improved coated article of claim 1, wherein said carbide based materials is selected from the group consisting of WC, CrC, (W,Cr)C, TiC, VC, NbC, B₄C, and SiC.

9. An enhanced wear resistant coating having a porosity of less than about 1 vol% and oxide content of less than about 2.5 vol%, said coating thermally sprayed by a modified, high-velocity thermal spray process using a mixture of fuel and oxygen with one or more inert gases using fine powder particles ranging from about 0.5 to about 30 microns, and further wherein said coating comprises hard phases and a metallic binder, whereby said coating has an abrasion resistance factor designated as (R), said abrasion resistance factor (R) defined as a ratio of an average size of fine abrasive particles to a mean free path of the metallic binder, said abrasion resistance factor (R) having a value ranging from about 1 to about 65 for corresponding average sizes of the fine abrasive particles ranging from about 0.5 to 15 microns.

10. The enhanced wear resistant coating of claim 9, further comprising a Vickers Hardness equal to or greater than about 950 HV_{300g}.

11. The enhanced wear resistant coating of claim 9, wherein said hard phases is selected from the group consisting of WC, CrC, (W,Cr)C, TiC, VC, NbC, B₄C, SiC and Diamond, and further wherein said metallic binder is selected from the group consisting of Co, CoCr, Ni, NiCr, Mo, Fe, FeCrAl, FeCr, FeB, FeAl, TiAl, and Ti.

12. An enhanced wear resistant coating suitable for protection against fine abrasive particles, said wear resistant coating having a porosity of less than about 1 vol% and an oxide content of less than about 2.5 vol%, said wear resistant coating comprising hard phases and a metallic binder, said coating configured to substantially reduce wear of the metallic binder with an abrasion resistance factor designated as (R) defined as a ratio of an average size of the abrasive fine particles to a mean free path of the metallic binder, said abrasion resistance factor having a value ranging from about 1 to about 65;
with the proviso that when an average size of the abrasive fine particles is about 0.5, the abrasion resistance factor (R) ranges from about 1 to about 3;
with the proviso that when an average size of the abrasive fine particles is about 0.75, the abrasion resistance factor (R) ranges from about 2 to about 4;
with the proviso that when an average size of the abrasive fine particles is about 1 micron, the abrasion resistance factor (R) ranges from about 3 to about 5;
with the proviso that when the average size of the abrasive fine particles ranges from about 2 to about 3 microns, the abrasion resistance factor (R) ranges from about 6 to about 14;
with the proviso that when the average size of the abrasive fine particles ranges from about 4 to about 7 microns, the abrasion resistance factor (R) ranges from about 13 to about 30; and
with the proviso that when the average size of the abrasive fine particles ranges from about 8 to about 15 microns, the abrasion resistance factor (R) ranges from about 25 to about 65.

13. The wear resistant coating of claim 12, wherein said abrasive fine particles are battery electrode materials.

14. The wear resistant coating of claim 12, said coating further comprising a Vickers Hardness equal to or greater than about 950 HV_{300g}.

15. The wear resistant coating of claim 12, wherein said hard phase is selected from the group consisting of wherein said hard phases is selected from the group consisting of WC, CrC, (W,Cr)C, TiC, VC, NbC, B₄C, SiC and Diamond, and further wherein said metallic binder is selected from the group consisting of Co, CoCr, Ni, NiCr, Mo, Fe, FeCrAl, FeCr, FeB, FeAl, TiAl and Ti.
